# DEMANDE DE BREVET EUROPEEN

(11) **EP 1 849 631 A1**
(43) Date de publication de la demande: **31.10.2007**
(21) Numéro de dépôt: 07290519.3
(22) Date de dépôt: 25.04.2007
(51) Int. Cl.: B60C 23/06, B60G 7/00

(54) **Procédé de détermination d'une condition de roulage par analye fréquentielle de la rotation de la butée de suspension**

(30) Priorité: 27.04.2006 FR 0603800
(71) Demandeur: SNR ROULEMENTS S.A., 74000 Annecy (FR)
(72) Inventeur: Blanchin, Olivier, 74000 Annecy (FR)
(74) Mandataire: Sayettat, Julien Christian

(57) **Abrégé**

L'invention concerne un procédé de détermination d'au moins une condition de roulage d'une roue de véhicule automobile, ladite roue étant montée sur le châssis (2) dudit véhicule par l'intermédiaire d'une jambe de force intégrant une butée de suspension qui comprend un organe tournant (3) par rapport au châssis (2), ledit procédé prévoyant d'utiliser un dispositif de détection des déplacements angulaires de l'organe tournant (3), ledit dispositif étant apte à délivrer un signal analogique qui est représentatif desdits déplacements angulaires en fonction du temps, ledit procédé prévoyant : d'effectuer une analyse fréquentielle du signal analogique de déplacement de sorte à obtenir un spectre comprenant au moins une fenêtre fréquentielle dans laquelle au moins une donnée dudit spectre est fonction d'un paramètre de roulage ; de mesurer au moins une desdites données ; de déterminer, à partir de la ou des donnée(s) mesurée(s), au moins une condition de roulage correspondant au paramètre de roulage ou à l'évolution dudit paramètre de roulage.

## Description

L'invention concerne un procédé de détermination d'au moins une condition de roulage d'une roue de véhicule automobile, ainsi qu'un montage comprenant une butée de suspension intégrée dans une jambe de force par l'intermédiaire de laquelle une roue de véhicule automobile est montée sur le châssis dudit véhicule.

Dans de nombreuses applications, notamment dans les systèmes de contrôle de la dynamique d'un véhicule automobile comme par exemple l'ABS ou l'ESP, il est nécessaire de déterminer périodiquement certaines conditions de roulage d'une roue de véhicule automobile. En particulier, les conditions de roulage à déterminer peuvent comprendre la pression d'air dans le pneu de la roue.

Pour déterminer la pression du pneu, il est connu d'utiliser une mesure directe en prévoyant par exemple un capteur de pression solidaire de la roue et, solidaire du châssis, un dispositif de détection du signal délivré par le capteur de sorte à rendre disponible la mesure dans le référentiel du véhicule.

Cette stratégie de détermination présente les limitations inhérentes à la nécessité d'une intégration spécifique du capteur et du dispositif de détection, ainsi que celles d'un mode de communication particulier entre eux.

On connaît par ailleurs des procédés de détermination d'une condition de roulage qui prévoient notamment un traitement de la vitesse de rotation de la roue. Toutefois, avec une telle stratégie de détermination indirecte d'une condition de roulage, il s'avère difficile de décorréler les différents paramètres de roulage qui influent sur le signal de vitesse de rotation de la roue.

L'invention vise à palier les problèmes mentionnés ci-dessus en proposant notamment un procédé de détermination indirecte d'une condition de roulage, et ce au niveau de la butée de suspension intégrée à la jambe de force.

A cet effet, et selon un premier aspect, l'invention propose un procédé de détermination d'au moins une condition de roulage d'une roue de véhicule automobile, ladite roue étant montée sur le châssis dudit véhicule par l'intermédiaire d'une jambe de force intégrant une butée de suspension qui comprend un organe tournant par rapport au châssis, ledit procédé prévoyant d'utiliser un dispositif de détection des déplacements angulaires de l'organe tournant, ledit dispositif étant apte à délivrer un signal analogique qui est représentatif desdits déplacements angulaires en fonction du temps, ledit procédé prévoyant :
- d'effectuer une analyse fréquentielle du signal analogique de déplacement de sorte à obtenir un spectre comprenant au moins une fenêtre fréquentielle dans laquelle au moins une donnée dudit spectre est fonction d'un paramètre de roulage ;
- de mesurer au moins une desdites données ;
- de déterminer, à partir de la ou des donnée(s) mesurée(s), au moins une condition de roulage correspondant au paramètre de roulage ou à l'évolution dudit paramètre de roulage.

Selon un deuxième aspect, l'invention propose un montage comprenant une butée de suspension intégrée dans une jambe de force par l'intermédiaire de laquelle une roue de véhicule automobile est montée sur le châssis dudit véhicule, ladite butée comprenant un organe fixe et un organe tournant sur lequel le ressort de suspension est en appui, ledit montage comprenant un dispositif de détection des déplacements angulaires de l'organe tournant par rapport à l'organe fixe, ledit dispositif étant apte à délivrer un signal analogique qui est représentatif desdits déplacements angulaires en fonction du temps. Le montage comprend en outre un dispositif de détermination d'au moins une condition de roulage de la roue, ledit dispositif comprenant des moyens d'analyse fréquentielle du signal analogique de déplacement, des moyens de mesure d'au moins une donnée dudit spectre et des moyens de traitement desdites données qui sont aptes à déterminer au moins une condition de roulage de la roue.

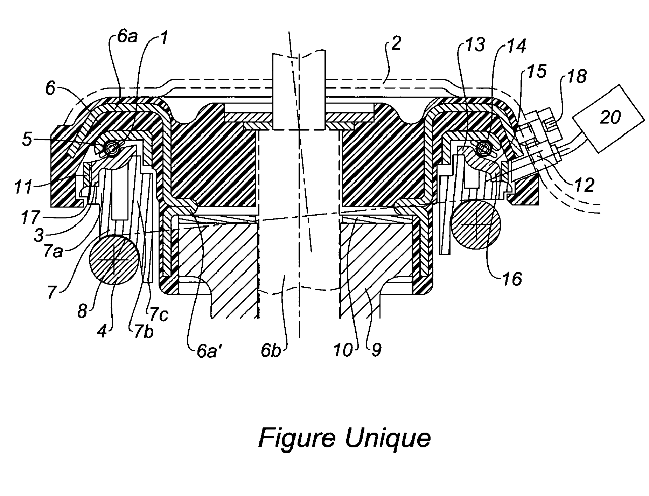

D'autres particularités et avantages de l'invention apparaîtront dans la description qui suit faite en référence à la figure jointe représentant de façon partielle et en coupe longitudinale un montage comprenant une butée de suspension selon un mode de réalisation de l'invention.

L'invention concerne un procédé de détermination d'au moins une condition de roulage d'une roue de véhicule automobile sur le sol. De façon connue, la roue est montée sur le châssis 2 du véhicule automobile par l'intermédiaire d'une jambe de force qui permet la suspension de la caisse relativement au sol. A cet effet, la jambe de force comprend classiquement un amortisseur, un ressort de suspension ainsi qu'une butée de suspension sur laquelle le ressort 4 vient en appui.

La butée de suspension comprend un organe supérieur fixe 1 et un organe inférieur tournant 3 sur lequel le ressort 4 est en appui de sorte à provoquer la rotation de ladite bague tournante. En effet, lorsque le ressort 4 est sollicité en compression et en détente, l'enroulement des spires de ce dernier sur elles-mêmes est modifié, ce qui entraîne la rotation de l'organe tournant 3.

Lors de ces sollicitations, le système a un comportement dynamique de type masse - ressort, la jambe de force reliant la masse suspendue du véhicule à la masse non suspendue en contact avec le sol. En outre, le pneu de la roue présente également un fonctionnement dynamique de type ressort / amortisseur. Le comportement dynamique de ce système présente donc des fréquences propres qui sont fonction des caractéristiques de chacun des composants formant celui-ci, en particulier des caractéristiques de l'amortisseur, du ressort 4 et du pneu.

L'invention telle que présentée ci-dessous vise à analyser le comportement dynamique de la jambe de force afin de pouvoir déterminer au moins une condition de roulage de la roue.

Pour ce faire, le procédé prévoit d'utiliser un dispositif de détection des déplacements angulaires de l'organe tournant 3 de la butée de suspension. Le dispositif est apte à délivrer un signal analogique qui est représentatif desdits déplacements angulaires en fonction du temps, lesdits déplacements étant fonction du comportement dynamique de l'ensemble jambe de force et roue.

En relation avec la figure, on décrit un montage comprenant une butée de suspension et un tel dispositif de détection, ledit dispositif comprenant un codeur générateur d'impulsions 11 qui est solidaire en rotation de l'organe tournant 3 et un capteur fixe 12 par rapport au codeur 11 qui est apte à détecter les impulsions de sorte à générer le signal analogique en fonction du temps. Selon le mode de réalisation représenté, le capteur 12 est solidaire du châssis 2 du véhicule, mais on pourrait également prévoir de rendre solidaire ledit capteur d'un composant de la jambe de force, notamment de l'organe fixe 1 de la butée de suspension.

Dans un exemple particulier, le codeur 11 est formé d'un anneau magnétique multipolaire en matériau synthétique chargé de particules magnétiques, notamment en ferrite, une pluralité de paires de pôles Nord et Sud étant réalisée sur ledit anneau. Toutefois, compte tenu de la faible amplitude de la rotation, on pourrait envisager un codeur 11 comprenant seulement une portion annulaire multipolaire.

Le capteur 12 associé peut comprendre au moins deux éléments sensibles qui sont par exemple choisis dans le groupe comprenant les sondes à effet Hall, les magnétorésistances, les magnétorésistances géantes ou les sondes de type TMR (pour Tunnel MagnetoResistance). En effet, de façon connue, ces sondes permettent de fournir un signal analogique en fonction de la rotation du codeur 11 en faces desquelles elles sont disposées à distance d'entrefer.

En variante, il est également possible d'utiliser une autre technologie pour délivrer le signal, par exemple une technologie optique en utilisant un codeur présentant des motifs optiques et un détecteur optique placé en regard dudit codeur.

Le procédé de détermination prévoit d'effectuer une analyse fréquentielle du signal analogique de déplacement, par exemple en effectuant une transformée de Fourier FFT temporelle dudit signal. Cette analyse permet d'extraire les fréquences temporelles individuelles du signal de déplacement de l'organe tournant 3, et de leur affecter respectivement une amplitude.

Comme mentionné ci-dessus, le comportement dynamique de l'ensemble comprenant la roue et la jambe de force est fonction des caractéristiques propres de chacun des composants dudit ensemble. Par conséquent, l'analyse fréquentielle peut être réalisée de sorte que le spectre obtenu comprenne des fenêtres fréquentielles dans lesquelles au moins une donnée du spectre est fonction d'un paramètre de roulage correspondant à une caractéristique d'un composant.

En particulier, un étalonnage de l'ensemble comprenant la roue et la jambe de force peut être réalisé pour établir une relation entre au moins une donnée du spectre et la condition de roulage. En variante, une simulation numérique peut être réalisée à cet effet. Par ailleurs, notons que l'influence de l'angle de braquage de la roue peut être décorrélée de la détermination de la condition de roulage puisque la fréquence propre de celui-ci n'est pas du même ordre de grandeur que celles induites par les conditions dynamiques de roulage.

Selon une réalisation, le paramètre de roulage est choisi dans le groupe des paramètres influant sur la raideur de l'ensemble comprenant la roue et la jambe de force, notamment la pression du pneu de la roue, l'état d'usure dudit pneu, l'état de l'amortisseur de la jambe de force. En effet, la valeur de chacun de ces paramètres influe sur la raideur de l'ensemble et donc sur les fréquences propres qui sont extraites par l'analyse par transformée de Fourier FFT.

En variante, le paramètre de roulage peut être choisi dans le groupe des paramètres extrinsèques à l'ensemble comprenant la roue et la jambe de force tout en influant sur le comportement dynamique de celui-ci, tel que l'état de la chaussée sur laquelle la roue roule.

En particulier, il est possible de discriminer une fenêtre fréquentielle comprenant au moins une raie, la donnée fonction du paramètre de roulage étant choisie dans le groupe comprenant l'amplitude de la raie, la largeur de la raie, la fréquence de la raie, ou une combinaison de ces caractéristiques.

Le procédé selon l'invention prévoit de mesurer au moins une donnée dans la fenêtre correspondant à la condition de roulage à déterminer. En variante, on peut prévoir de mesurer plusieurs données dans une même fenêtre et/ou de mesurer une ou plusieurs données dans plus d'une fenêtre, chacune de ces données étant fonction de la condition de roulage à déterminer.

Selon une première réalisation, la condition de roulage est ensuite déterminée par comparaison de la donnée mesurée avec une valeur d'étalonnage correspondant au paramètre de roulage. En particulier, la valeur d'étalonnage peut être extraite d'une loi d'évolution de la donnée en fonction du paramètre de roulage, ladite loi pouvant être établie par expérimentation ou par simulation.

Dans cette réalisation, le procédé permet de déterminer une condition de roulage sous la forme d'un paramètre de roulage, par exemple la pression du pneu. En outre, la mise en oeuvre périodique du procédé permet de surveiller le paramètre de roulage en continu et donc de le rendre disponible en temps réel pour, par exemple, un calculateur de contrôle de la dynamique du véhicule.

En variante, le paramètre de roulage peut être enregistré de façon périodique, la valeur d'étalonnage étant ajustée en fonction de l'historique des valeurs enregistrées. Cette réalisation permet de tenir compte des éventuelles dérives dans le temps de la loi d'évolution entre la donnée et le paramètre de roulage.

Selon une deuxième réalisation, la condition de roulage est déterminée par comparaison de la variation d'un paramètre de roulage avec un seuil correspondant à ladite condition. Dans cette réalisation, il est par exemple possible de déterminer une condition de roulage « pneu crevé » si la pression dans le pneu varie de plus d'un pourcentage donné dans un intervalle de temps déterminé.

En particulier, lorsque le paramètre de roulage est enregistré de façon périodique, ledit paramètre peut être comparé avec au moins une valeur enregistrée de sorte à déterminer la condition de roulage.

Lorsque le procédé selon l'invention est mis en oeuvre pour déterminer plusieurs conditions de roulage, on peut envisager que certaines de ces conditions correspondent à des paramètres de roulage et que d'autres correspondent à des évolutions de paramètres de roulage. En particulier, pour la pression du pneu, on peut envisager une détermination conjointe de la valeur de cette pression et de celle d'une condition « pneu crevé », ces deux conditions de roulage pouvant être ainsi traitées de façon différentiée dans la stratégie d'intervention des systèmes de contrôle de la dynamique du véhicule.

Par ailleurs, la condition de roulage peut être déterminée en outre en utilisant au moins un autre paramètre de roulage. Selon une réalisation, cet autre paramètre de roulage peut être l'angle du volant actionnant la roue, la vitesse de rotation de ladite roue, la déformation de la butée de suspension, l'enfoncement de la suspension et/ou l'angle de rotation de l'organe tournant de la butée. Ainsi, par fusion des données, il est possible d'améliorer la décorrélation dans le spectre entre l'influence respective de ces paramètres et des paramètres de roulage à déterminer.

Selon une autre réalisation, le paramètre supplémentaire peut concerner un autre ensemble comprenant la roue et la jambe de force du véhicule. En particulier, il est envisageable de fiabiliser la détermination de la pression d'un pneu selon l'invention en utilisant la détermination de la pression d'au moins l'un des autres pneus, en particulier du pneu de l'autre roue du même essieu. En effet, par comparaison des deux pressions, il est possible de discriminer si la condition de roulage affecte un pneu ou les deux pneus.

Selon une réalisation supplémentaire, le procédé de détermination selon l'invention peut permettre de fiabiliser la mesure d'un paramètre de roulage. En particulier, le procédé de détermination peut prévoir de comparer une mesure directe de la pression d'un pneu avec la pression déterminée par analyse fréquentielle, de sorte à bénéficier d'une redondance sur cette détermination.

L'invention concerne également un montage comprenant une butée de suspension dont un mode de réalisation est représenté sur la figure jointe. La butée comprend une bague supérieure fixe 1, une bague inférieure tournante 2 et des corps roulants 5 disposés entre lesdites bagues de sorte à permettre la rotation relative desdites bagues autour d'un axe sensiblement vertical.

Dans le mode de réalisation représenté, la butée de suspension comprend une coupelle supérieure 6 associée à la bague supérieure 1, ladite coupelle étant associée au châssis 2, et une coupelle inférieure 7 associée à la bague inférieure 3.

La coupelle inférieure 7 est formée d'une pièce essentiellement annulaire qui comprend un logement 8 dans lequel la partie extrême du ressort 4 vient en appui en assurant une fixation relative en rotation du ressort 4 sur la coupelle inférieure 7. Ainsi, la réponse dynamique du ressort 4 sur la coupelle inférieure 7 est transformée, du fait de l'enroulement des spires du ressort 4, en déplacement angulaire de la bague inférieure 3 par rapport à la bague supérieure 1. La coupelle inférieure 7 est par exemple obtenue par moulage d'un matériau thermoplastique de type polyamide 6.6.

La coupelle supérieure 6 est formée d'une pièce essentiellement annulaire qui, dans le mode de réalisation représenté, est formée en caoutchouc surmoulé sur un insert de renfort annulaire 6a, ladite coupelle comprenant un alésage 6b agencé pour recevoir l'extrémité de la tige de l'amortisseur de suspension.

L'insert 6a comprend une partie annulaire radiale et une jupe cylindrique s'étendant axialement vers le bas à partir du bord extérieur de la partie radiale.

La jupe axiale comprend un repli radial annulaire 6a' pour l'appui d'une butée de choc 9 par l'intermédiaire d'un insert 10 monté sur ladite butée de choc.

La butée de choc 9 comprend une partie annulaire axiale et une jupe cylindrique s'étendant axialement vers le bas à partir du bord extérieur de la partie radiale.

Les bagues 1, 3 du roulement sont constituées chacune d'une rondelle de tôle emboutie qui sont respectivement associées, par exemple par emmanchement, aux deux coupelles 6, 7, lesdites bagues comprenant des chemins de roulement disposés en vis-à-vis de sorte à recevoir les corps roulants 5 qui, dans les modes de réalisation représentés, sont sphériques. En particulier, les géométries des coupelles 6, 7 et des bagues 1, 3 associées sont agencées pour permettre une fixation fiable des bagues 1, 3 sur les coupelles 6, 7, et ce notamment vis-à-vis des efforts radiaux.

Bien que la description de l'invention soit faite en relation avec une butée de suspension de type « troisième génération » dans laquelle le bloc filtrant est intégré à la coupelle supérieure 6, l'invention est directement transposable par l'homme du métier à des butées de suspension présentant une autre structure générale, c'est-à-dire dans lesquelles les différents organes fonctionnels de la butée sont agencés différemment. En outre, la description faite est également directement transposable à une butée de suspension du type sans roulement, par exemple du type à palier lisse ou comprenant une pièce élastomérique déformable en torsion, ladite butée comprenant toujours un organe fixe et un organe tournant sous l'effet des efforts exercés par le ressort 4.

Le montage comprend en outre un dispositif de détection des déplacements angulaires de l'organe tournant par rapport à l'organe fixe, ledit dispositif étant apte à délivrer un signal analogique qui est représentatif desdits déplacements angulaire en fonction du temps. Dans le mode de réalisation représenté, le codeur est associé à la bague inférieure de sorte à permettre une lecture radiale des impulsions issues du codeur.

Plus précisément, la bague inférieure comprend, de l'intérieur vers l'extérieur et reliés entre eux, une couronne radiale 13, le chemin de roulement 14 et une couronne comprenant une partie radiale 15 et une partie axiale 16. La couronne intérieure 13 est décalée axialement vers le haut par rapport à la partie radiale 15. La coupelle inférieure 7 comprend du coté supérieur deux saillies cylindriques 7a, 7b destinées à se loger respectivement contre une couronne 13, 15 de sorte à assurer une solidarisation fiable de la bague inférieure 3 sur la coupelle 7. Par ailleurs, la coupelle inférieure 7 comprend, du coté inférieur, une saillie cylindrique 7c qui forme la paroi axiale du logement 8, la paroi radiale dudit logement étant formée par la face inférieure du corps de la coupelle inférieure 7.

Le codeur 11 est surmoulé sur une portée cylindrique annulaire d'une armature 17 qui est associée, par exemple par emmanchement, sur la face inférieure axiale de la partie axiale 16 de sorte que l'armature 17 vienne en appui sur la face extérieure radiale de la partie axiale 16.

Le capteur 12 est associé au châssis 2 au moyen d'une vis 18, ledit châssis et la coupelle supérieure 6 comprenant un logement destiné à recevoir ledit capteur de sorte à positionner les éléments sensibles en regard et à distance d'entrefer du codeur 11. En outre, la fiabilité de ce positionnement est améliorée par le fait que le codeur 11 est en appui sur la partie axiale 16, et que le capteur 12 comprend une extrémité biseautée permettant de disposer les éléments sensibles dans un plan sensiblement parallèle au plan du codeur 11, et ce sans interférer avec le codeur 11 lors de sa rotation.

L'invention n'est nullement limitée à un mode particulier d'intégration du dispositif de détection dans le montage, l'homme du métier pouvant par exemple se référer au document FR-2 847 516 qui décrit plusieurs réalisations possibles.

Le montage comprend en outre un dispositif de détermination 20 d'au moins une condition de roulage de la roue, de sorte à pouvoir notamment mettre en oeuvre le procédé tel que décrit précédemment. Dans le mode de réalisation représenté, le dispositif de détermination 20 est relié au capteur 12 par une liaison filaire, toutefois d'autres modes de communication des signaux peuvent être envisagés. En outre, le lieu d'implantation du dispositif de détermination 20 dans le véhicule peut être choisi sans contrainte relative à l'invention, y compris être implanté dans le calculateur central du véhicule.

Selon une réalisation, le dispositif peut être formé d'une unité de calcul comprenant des moyens d'analyse fréquentielle du signal analogique de déplacement, des moyens de mesure d'au moins une donnée dudit spectre et des moyens de traitement desdites données qui sont aptes à déterminer au moins une condition de roulage de la roue. En outre, le dispositif de détermination 20 peut comprendre des moyens de stockage de données.

## Revendications

1. Procédé de détermination d'au moins une condition de roulage d'une roue de véhicule automobile, ladite roue étant montée sur le châssis (2) dudit véhicule par l'intermédiaire d'une jambe de force intégrant une butée de suspension qui comprend un organe tournant (3) par rapport au châssis (2), ledit procédé prévoyant d'utiliser un dispositif de détection des déplacements angulaires de l'organe tournant (3), ledit dispositif étant apte à délivrer un signal analogique qui est représentatif desdits déplacements angulaires en fonction du temps, ledit procédé prévoyant :
- d'effectuer une analyse fréquentielle du signal analogique de déplacement de sorte à obtenir un spectre comprenant au moins une fenêtre fréquentielle dans laquelle au moins une donnée dudit spectre est fonction d'un paramètre de roulage ;
- de mesurer au moins une desdites données ;
- de déterminer, à partir de la ou des donnée(s) mesurée(s), au moins une condition de roulage correspondant au paramètre de roulage ou à l'évolution dudit paramètre de roulage.

2. Procédé de détermination selon la revendication 1, dans lequel l'analyse fréquentielle est effectuée par transformée de Fourier FFT temporelle.

3. Procédé de détermination selon la revendication 1 ou 2, dans lequel la fenêtre fréquentielle comprend au moins une raie, la donnée fonction du paramètre de roulage étant choisie dans le groupe comprenant l'amplitude de la raie, la largeur de la raie, la fréquence de la raie, ou une combinaison de ces caractéristiques.

4. Procédé de détermination selon l'une quelconque des revendications 1 à 3, dans lequel le paramètre de roulage est choisi dans le groupe des paramètres influant sur la raideur de l'ensemble comprenant la roue et la jambe de force, notamment la pression du pneu de la roue, l'état d'usure dudit pneu, l'état de l'amortisseur de la jambe de force.

5. Procédé de détermination selon l'une quelconque des revendications 1 à 4, dans lequel la condition de roulage est déterminée par comparaison de la donnée mesurée avec une valeur d'étalonnage correspond au paramètre de roulage.

6. Procédé de détermination selon la revendication 5, dans lequel le paramètre de roulage est enregistré de façon périodique, la valeur d'étalonnage étant ajustée en fonction de l'historique des valeurs enregistrées.

7. Procédé de détermination selon l'une quelconque des revendications 1 à 4, dans lequel la condition de roulage est déterminée par comparaison de la variation d'un paramètre de roulage avec un seuil correspondant à ladite condition.

8. Procédé de détermination selon la revendication 7, dans lequel le paramètre de roulage est enregistré de façon périodique, ledit paramètre étant comparé avec au moins une valeur enregistrée de sorte à déterminer la condition de roulage.

9. Procédé de détermination selon l'une quelconque des revendications 1 à 8, dans lequel la condition de roulage est déterminée en outre en utilisant au moins un autre paramètre de roulage parmi l'angle du volant actionnant la roue, la vitesse de rotation de la roue, la déformation de la butée de suspension, l'enfoncement de la suspension et/ou l'angle de rotation de l'organe tournant de la butée, la pression d'au moins l'un des pneus des autres roues dans le cas où la condition de roulage déterminée est la pression du pneu de la roue.

10. Montage comprenant une butée de suspension intégrée dans une jambe de force par l'intermédiaire de laquelle une roue de véhicule automobile est montée sur le châssis (2) dudit véhicule, ladite butée comprenant un organe fixe (1) et un organe tournant (3) sur lequel le ressort de suspension (4) est en appui, ledit montage comprenant un dispositif de détection des déplacements angulaires de l'organe tournant (3) par rapport à l'organe fixe (1), ledit dispositif étant apte à délivrer un signal analogique qui est représentatif desdits déplacements angulaires en fonction du temps, ledit montage étant **caractérisé en ce qu'**il comprend en outre un dispositif de détermination (20) d'au moins une condition de roulage de la roue, ledit dispositif comprenant des moyens d'analyse fréquentielle du signal analogique de déplacement, des moyens de mesure d'au moins une donnée dudit spectre et des moyens de traitement desdites données qui sont aptes à déterminer au moins une condition de roulage de la roue.
